# EUROPEAN PATENT SPECIFICATION

(11) **EP 1 313 339 B1**
(45) Date of publication and mention of the grant of the patent: **18.05.2005**
(21) Application number: 02380217.6
(22) Date of filing: 23.10.2002
(51) Int. Cl.: H04Q 7/36

(54) **UTMS radio beacon equipment**
UMTS Funkbakenvorrichtung
Equipement de balise radio UMTS

(30) Priority: 23.10.2001 ES 200102344
(43) Date of publication of application: 21.05.2003
(73) Proprietor: Telefonica, S.A., 28013 Madrid (ES)
(72) Inventor: Marino Aunon, Jesus, 28020 Madrid (ES); Ruiz Aragon, Pilar, 28020 Madrid (ES); Fillmore, David, 28020 Madrid (ES)
(74) Representative: Carpintero Lopez, Francisco

(56) References cited:
- WO-A-01/41486
- WO-A-99/12228
- US-A- 5 752 164
- US-A- 5 946 612
- US-A- 6 167 272

## Description

### OBJECT OF THE INVENTION

The present descriptive specification relates to a patent of invention application relative to a UMTS radio beacon electronic equipment, the purpose of which is that of serving as UMTS transmitter or fictitious B Node for carrying out the planning of the UMTS mobile radio network.

The invention carries out the functions of generating the following channels: synchronisation channel (SCH), common pilot channel (CPICH) and common control channel (CCPCH).

Moreover, it generates output power alarms when: the output power surpasses a value; the frequency of the synthesizer has drifted from that which it should be, or it is not generating the appropriate frequency, and when the battery level of the equipment is below a minimum.

To carry out the complete configuration of the equipment, the latter is connected to an external PC, from which the configuration is programmed which will allow a certain reference signal to be broadcast which will be recognised *a priori* by the receiving equipment.

### FIELD OF THE INVENTION

This invention has its application in the field of telecommunications and more specifically in the field of third generation mobile communications and of the transmission of UMTS signals.

### BACKGROUND OF THE INVENTION

The deployment of the mobile communications network with UMTS technology is still at a fairly early stage and precisely to assist in the carrying out of this task, the need has arisen to have the UMTS radio beacon equipment to assist in the planning of the network.

US-A- 6 167 272 discloses a radio beacon equipment used for the planning of mobile radio networks; the equipment broadcasts a reference signal of known characteristics which is received at plural geographically dispersed terminals; the terminals send corresponding measurement reports to the system on the basis of which network planning is effected.

Until the present time no knowledge exists of the specific structural details of any tool which performs the task of fictitious B node or radio beacon such as is carried out by the UMTS radio beacon equipment.

### DESCRIPTION OF THE INVENTION

The UMTS radio beacon equipment which is a fictitious B node, is the equivalent to what is known in GSM networks as fictitious BTS transmitter, that is, a transportable equipment that transmits a reference signal. This reference signal can be used to estimate the quality of propagation and the level of interference at different geographical points as a function of the received power and the error rate.

The UMTS radio beacon equipment, is formed by a digital signal processing (DSP) module which generates the analogue signals in base band which will modulate the radiofrequency carrier. For this, it builds the frames of the channels which comprise the reference signal including the stages of channel encoding and interleaving, and carries out the spreading, channel filtering and the digital to analogue conversion of the resulting signals. It also includes a radiofrequency (RF) module which carries out the QPSK (Quadrature Phase Shift Keying) modulation, Modulation by quadrature phase displacement, is a type of carrier frequency modulation in which the modulating signal is applied to the modulator circuit in phase and in quadrature, of the radiofrequency carrier with the signals in base band which are applied to it by the digital signal processing module, amplifies the RF signal until the required output power level is reached and filters it to avoid spurious signal emissions outside the UMTS transmission band. It also uses a GPS (Global Positioning System) module to provide the localisation information which the equipment broadcasts over the transport channel BCH, included in the reference signal. Finally the power supply module, generates the supply voltages of the foregoing modules from an external input, and it incorporates batteries to permit the equipment to operate without connection to the electrical mains.

As well as the foregoing modules, which form the actual radio beacon equipment, the equipment has an operator interface through a connection with a personal computer. The equipment is configured from a software application in the PC defining the operating parameters and also the status of equipment alarms is shown.

The reference signal includes the following UMTS physical channels:
A primary synchronisation channel (channel P-SCH).
A secondary synchronisation channel (channel S-SCH).
A primary pilot channel (channel P-CPICH).
One or several secondary pilot channels (channels S-CPICH).
A common control primary channel (channel P-CCPCH).
One or several secondary common control physical channels (channels S-CCPCH).

The physical channel P-CCPCH transports the BCH channel which is the broadcast channel wherein the information is included on the cell which the equipment radio beacon defines. The rest of the channels do not correspond to any transport channel, but instead they are auxiliary channels which are used so that the terminals are synchronised with the radio beacon equipment (SCH) and identify the randomising code employed by the P-CCPCH (CPICH).

From the software application the operator can configure the following parameters: frequency of the radiofrequency carrier, total output power, relative power of each channel, status of the amplifier of the radio beacon equipment, localisation broadcast in the P-CCPCH (which carries the BCH). Also, the network parameters can be configured broadcast in the BCH and which form the system information blocks.

The alarms which the radio beacon equipment generates are: the output power alarm which is high when the difference between the real output power and that programmed surpasses a threshold of 2.5 dB, which is the maximum error admitted for the B nodes under extreme conditions (see UMTS specifications), the synthesizer alarm which is high when the synthesizer that generates the radiofrequency carrier is not locked on, that is, it does not generate the programmed frequency, and the power supply alarm which is generated when the voltage level of the power supply batteries falls below a certain value.

### DESCRIPTION OF THE DRAWINGS

Other characteristics and advantages of the invention will be shown clearly from the description given below of an example of embodiment, which is made by way of illustration and not restrictively, with reference to the accompanying drawings.

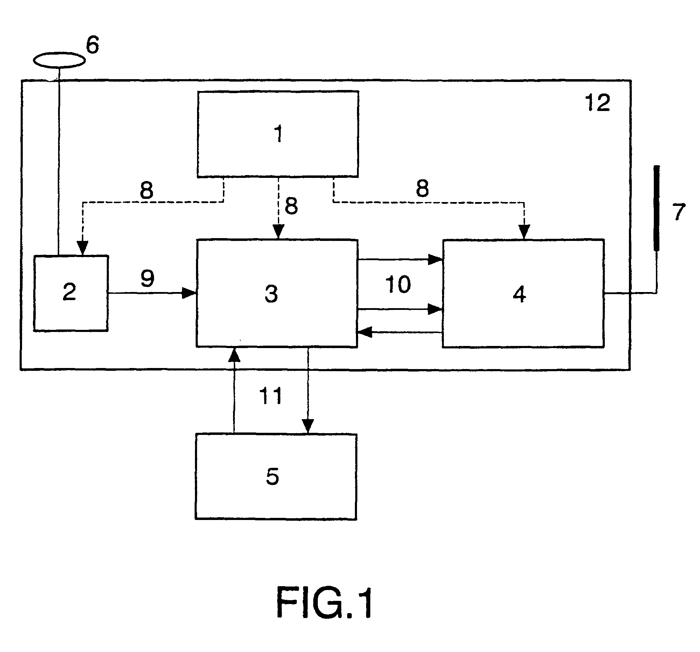

Figure 1 shows the block diagram of the UMTS radio beacon equipment.

### PREFERRED EMBODIMENT OF THE INVENTION

The UMTS radio beacon equipment (12), is formed by the following functional blocks:

Digital signal processing (DSP) module (3) generates the analogue signals in base band which will modulate the radiofrequency carrier RF. For this, it constructs the frames of the channels which comprise the reference signal including the stages of channel encoding and interleaving, and carries out the spreading, the channel filtering and the digital to analogue conversion of the resulting signals (10).

Radiofrequency module (4) carries out the QPSK modulation of the radiofrequency carrier with the signals in base band which it receives from the digital signal processing module (3), amplifies the RF signal until the required output power level is reached and filters it to prevent spurious signal emission outside the UMTS transmission band. This radiation takes place through the antenna (7).

GPS module (2) picks up the position information by means of the antenna (6) and passes it to the DSP module via the connection (9) which is then broadcast by the UMTS radio beacon equipment (12) over the transport channel BCH, included in the reference signal.

Power supply module (1) generates the power supply voltages (8) of the foregoing modules from an external input, and it incorporates batteries to permit the equipment to operate without connection to the electrical mains.

As well as the foregoing modules which form the actual radio beacon equipment (12), the operator interface is implemented by means of a connection (11) with a personal computer (5).

From the configuration software application in the PC (5), the equipment is started defining the operating parameters and it shows the status of the alarms of the equipment (11).

## Claims

1. UMTS radio beacon equipment intended to take part in the planning of the UMTS mobile radio network, which is capable of transmitting a reference UMTS signal of known characteristics which can be received by different geographically dispersed terminals and which as a function of the received power and of the measured error rate, permits an estimate of the quality of the broadcast signal and the level of interference existing **characterised in that** it is a portable and autonomous equipment which is formed by:
a digital signal processing module (3) for generating analogue signals in base band which will modulate to a radiofrequency carrier,
a radiofrequency module (4) for carrying out QPSK (Quadrature Phase Shift Keying) modulation, of the radiofrequency carrier with the signals in base band which are applied to it by the digital signal processing module (3), for amplifying the RF signal until a required output power level is reached and for filtering it to prevent spurious signal emission outside the UMTS transmission band,
a Global Positioning System module (2), for providing localisation information which the equipment broadcasts over a transport channel BCH, included in the reference signal,
a power supply module (1) for generating supply voltages of the foregoing modules from an external input, and incorporating batteries to allow the equipment to operate without connection to electrical mains.

2. UMTS radio beacon equipment, according to claim 1, **characterised in that** to generate the analogue signals in base band which will modulate the radiofrequency carrier, the digital signal processing module (3) constructs the frames of the channels which comprise the reference signal including the stages of channel encoding and interleaving, and carries out the spreading, the channel filtering and the digital to analogue conversion of the resulting signals.

3. UMTS radio beacon equipment, according to the previous claims, **characterised in that** it provides means of generating output power alarms when: the output power surpasses a threshold value; or the frequency of the synthesizer drifts with regard to that which it should be, or it is not generating the appropriate frequency, or when the battery level of the equipment is below a minimum

4. UMTS radio beacon equipment, according to the previous claims, **characterised in that** it incorporates an operator interface through a connection with a personal computer, so that from a software application in the personal computer the status of the equipment alarms is shown and the radio beacon equipment is configured defining the following operating parameters: frequency of the radiofrequency carrier, total output power, relative power of each channel, status of the amplifier of the radio beacon equipment, localisation broadcast in the primary common control channel P-CCPCH, being also able to configure the network parameters broadcast in the channel BCH and which form the information blocks of the system.

5. UMTS radio beacon equipment, according to claim 1, **characterised in that** the reference signal includes the following physical UMTS channels:
a primary synchronisation channel (channel P-SCH),
a secondary synchronisation channel (channel S-SCH),
a primary pilot channel (channel P-CPICH),
one or several secondary pilot channels (channels S-CPICH),
a primary common control channel (channel P-CCPCH) which transports the broadcast channel (BCH) which includes the information on the cell which the equipment radio beacon defines,
one or several secondary common control physical channels (channels S-CCPCH).

6. UMTS radio beacon equipment, according to claim 1, **characterised in that** it is capable of radiating the UMTS signal generated via electromagnetic waves, using for this a linear power amplifier.

7. UMTS radio beacon equipment, according to the previous claims, **characterised in that** it is capable of adjusting the total output power dynamically in steps of 1 dB.

8. UMTS radio beacon equipment, according to the previous claims, **characterised in that** it is capable of adjusting the relative power of each channel with respect to the total power, and it allows the total output power to be distributed among the different channels at the election of the user.

9. UMTS radio beacon equipment, according to the previous claims, **characterised in that** it is capable of generating the reference signal to be transmitted varying the primary randomising code among the 512 values possible.

10. UMTS radio beacon equipment, according to the previous claims, **characterised in that** it turns off the output power amplifier automatically in the event of alarm and in a way completely independent of the rest of the equipment.

11. UMTS radio beacon equipment, according to the previous claims, **characterised in that** it is capable of broadcasting in the channel BCH, the parameters of the system configured by the operator in the external computer which permits selection of the characteristics of the signal to be transmitted.

## Patentansprüche

1. UMTS-Funksignalvorrichtung zur Unterstützung bei der Planung des UMTS-Mobilfunknetzwerks, die ein UMTS-Bezugssignal mit bekannten Eigenschaften übertragen kann, das von verschiedenen, geografisch verstreuten Endgeräten empfangen werden kann, und als Funktion der empfangenen Leistung und der gemessenen Fehlerrate eine Einschätzung der Qualität des Rundfunksignals sowie des vorhandenen Störungspegels erlaubt, **dadurch gekennzeichnet, dass** sie eine tragbare und autarke Vorrichtung darstellt, die gebildet ist aus: einem Digitalsignalverarbeitungsmodul (3) zur Erzeugung von Analogsignalen im Basisband, die auf einen Hochfrequenzträger modulieren, ein Hochfrequenzmodul (4) zum Durchführen einer QPSK (quadrature phase shift keying - Quadratur-Phasenumtastungs)-Modulation des Hochfrequenzträgers mit den Signalen im Basisband, die diesem durch das Digitalsignalverarbeitungsmodul (3) zum Verstärken des HF-Signals zugeführt werden, bis ein erforderlicher Ausgangsleistungspegel erreicht wird, und zum Filtern desselben, um eine Störsignalemission außerhalb des UMTS-Übertragungsbandes zu verhindern, ein GPS (Global Positioning System)-Modul (2) zum Bereitstellen von Lokalisierungsinformationen, welche die Vorrichtung über einen Transportkanal BCH, enthalten im Bezugssignal, überträgt, ein Stromversorgungsmodul (1) zum Erzeugen von Versorgungsspannungen der vorhergehenden Module aus einem externen Eingang und mit Batterien, die es der Vorrichtung ermöglichen, ohne Verbindung mit dem Hauptnetz zu arbeiten.

2. UMTS-Funksignalvorrichtung nach Anspruch 1, **dadurch gekennzeichnet, dass** zum Erzeugen der Analogsignale im Basisband, die den Hochfrequenzträger modulieren, das Digitalsignalverarbeitungsmodul (3) die Rahmen der Kanäle bildet, die das Bezugssignal mit den Stufen Kanalkodierung und -verschachtelung umfassen, und das Spreizen, die Kanalfilterung sowie die Digital-Analog-Umsetzung der resultierenden Signale durchführt.

3. UMTS-Funksignalvorrichtung nach den vorhergehenden Ansprüchen, **dadurch gekennzeichnet, dass** sie eine Einrichtung zum Erzeugen von Ausgangsleistungswarnmeldungen vorsieht, wenn die Ausgangsleistung einen Schwellenwert übersteigt oder die Frequenz des Synthesizer vom Sollzustand abdriftet oder nicht die passende Frequenz erzeugt wird oder der Batteriepegel der Vorrichtung unterhalb eines Minimalwertes liegt.

4. UMTS-Funksignalvorrichtung nach den vorhergehenden Ansprüchen, **dadurch gekennzeichnet, dass** sie eine Bedienerschnittstelle durch Anschluss an einen PC aufweist, so dass aus einer Software-Anwendung im PC der Status der Vorrichtungswarnmeldungen gezeigt wird und die Funksignalvorrichtung so konfiguriert ist, dass sie die folgenden Betriebsparameter definiert: Frequenz des Hochfrequenzträgers, Gesamtausgangsleistung, relative Leistung eines jeden Kanals, Status des Verstärkers der Funksignalvorrichtung, Lokalisierungübertragung im primären gemeinsamen Kontrollkanal P-CCPCH, wodurch auch eine Konfiguration der Netzwerkparameter möglich ist, die in dem Kanal BCH übertragen werden und die Informationsblöcke des Systems bilden.

5. UMTS-Funksignalvorrichtung nach Anspruch 1, **dadurch gekennzeichnet, dass** das Bezugssignal die folgenden physikalischen UMTS-Kanäle enthält: einen primären Synchronisationskanal (Kanal P-SCH), einen sekundären Synchronisationskanal (Kanal S-SCH), einen primären Pilotkanal (Kanal P-CPICH), einen oder mehrere sekundäre Pilotkanäle (Kanäle S-CPICH), einen primären gemeinsamen Kontrollkanal (Kanal P-CCPCH), der den Übertragungskanal (BCH) transportiert, der die Informationen auf der Zelle umfasst, die das Gerätefunksignal definiert, einen oder mehrere sekundäre gemeinsame physikalische Kontrollkanäle (Kanäle S-CCPCH).

6. UMTS-Funksignalvorrichtung nach Anspruch 1, **dadurch gekennzeichnet, dass** sie das über elektromagnetische Wellen erzeugte UMTS-Signal unter Verwendung eines Linearleistungsverstärkers ausstrahlt.

7. UMTS-Funksignalvorrichtung nach den vorhergehenden Ansprüchen, **dadurch gekennzeichnet, dass** sie die Gesamtausgangsleistung dynamisch in Schritten von 1 dB einstellen kann.

8. UMTS-Funksignalvorrichtung nach den vorhergehenden Ansprüchen, **dadurch gekennzeichnet, dass** sie die relative Leistung eines jeden Kanals bezüglich der Gesamtleistung einstellen kann und eine Verteilung der Gesamtausgangsleistung unter den verschiedenen Kanälen nach Wahl des Benutzers erlaubt.

9. UMTS-Funksignalvorrichtung nach den vorhergehenden Ansprüchen, **dadurch gekennzeichnet, dass** sie das zu übermittelnde Bezugssignal durch Veränderung des primären Zufallskodes unter den 512 möglichen Werten erzeugen kann.

10. UMTS-Funksignalvorrichtung nach den vorhergehenden Ansprüchen, **dadurch gekennzeichnet, dass** sie den Ausgangsleistungsverstärker automatisch bei einer Warnmeldung und völlig unabhängig vom Rest der Vorrichtung abschaltet.

11. UMTS-Funksignalvorrichtung nach den vorhergehenden Ansprüchen, **dadurch gekennzeichnet, dass** sie im Kanal BCH die vom Benutzer im externen Computer konfigurierten Parameter übertragen kann, was eine Auswahl der Eigenschaften des zu übermittelnden Signals ermöglicht.

## Revendications

1. Equipement de radiophare de système universel de télécommunication avec mobile (UMTS) destiné à faire partie de la planification de réseaux radio mobiles UMTS, et capable de transmettre un signal UMTS de référence de caractéristiques connues qui peut être reçu par différents terminaux dispersés géographiquement et qui en tant que fonction de la puissance reçue et du taux d'erreurs mesurés permet une estimation de la qualité du signal de radiodiffusion et du niveau d'interférences existant **caractérisé en ce qu'**il est un équipement portable et autonome qui est formé par : un module de traitement de signal numérique (3) pour générer des signaux analogiques dans la bande de base qui moduleront un support de radio fréquences, un module de radio fréquences (4) pour effectuer la modulation QPSK (modulation par déplacement de phase en quadrature) du support de radiofréquence avec les signaux dans la bande de base qui lui sont appliqués par le module de traitement de signal numérique (3) pour amplifier le signal RF jusqu'à ce qu'un niveau de puissance de sortie requis soit atteint et pour le filtrer pour empêcher une émission de signal parasite en dehors de la bande de transmission UMTS, un module de système de positionnement global (2) pour fournir une information de localisation que l'équipement diffuse par radiodiffusion sur un canal de transport BCH compris dans le signal de référence, un module d'alimentation de puissance (1) pour générer les tensions d'alimentation des modules précédents à partir d'une entrée externe et incorporant des batteries pour permettre à l'équipement de fonctionner sans connexion à des moyens électriques.

2. Equipement de radiophare UMTS selon la revendication 1, **caractérisé en ce que** pour générer les signaux analogiques dans la bande de base qui moduleront le support de radiofréquence, le module de traitement de signal numérique (3) construit les structures des canaux qui comprennent le signal de référence incluant les étapes d'encodage et d'entrelacement de canal et effectuent la diffusion, le filtrage du canal et la conversion numérique en analogique des signaux résultant.

3. Equipement de radiophare UMTS selon les revendications précédentes, **caractérisé en ce qu'**il fournit des moyens de générer des alarmes de puissance de sortie quand : la puissance de sortie dépasse une valeur seuil ; où la fréquence du synthétiseur chute par rapport à ce qu'elle devrait être ou si elle ne génère pas la fréquence appropriée ou lorsque le niveau de batterie de l'équipement est inférieur à un minimum.

4. Equipement de radiophare UMTS selon les revendications précédentes, **caractérisé en ce qu'**il incorpore une interface d'opérateur par l'intermédiaire d'une connexion avec un ordinateur personnel, de sorte qu'à partir d'une application logiciel dans l'ordinateur personnel, l'état des alarmes de l'équipement est représenté et l'équipement de radiophare est configuré pour définir les paramètres de fonctionnement suivant : la fréquence du support de radio fréquence, la puissance de sortie totale, la puissance relative de chaque canal, l'état de l'amplificateur de l'équipement de radiophare, la radiodiffusion de localisation dans le canal de commande commun primaire P-CCPCH, et est également capable de configurer la radiodiffusion de paramètres de réseau dans le canal BCH et qui forment les blocs d'information du système.

5. Equipement de radiophare UMTS selon la revendication 1, **caractérisé en ce que** le signal de référence comprend les canaux UMTS physiques suivants : un canal de synchronisation primaire (canal P-SCH), un canal de synchronisation secondaire (canal S-SCH), un canal pilote primaire (canal P-CPICH), un ou plusieurs canaux pilotes secondaires (canaux S-CPICH), un canal de commande commun primaire (canal P-CCPCH) qui transporte le canal de radiodiffusion (BCH) qui comprend l'information sur la cellule que l'équipement radiophare définit, un ou plusieurs canaux physiques de commande communs secondaires (canaux S-CCPCH).

6. Equipement de radiophare UMTS selon la revendication 1, **caractérisé en ce qu'**il est capable d'émettre le signal UMTS généré via des ondes électromagnétiques en utilisant pour cela un amplificateur de puissance linéaire.

7. Equipement de radiophare UMTS selon les revendications précédentes, **caractérisé en ce qu'**il est capable d'ajuster la puissance de sortie totale de manière dynamique dans des étapes de 1 dB.

8. Equipement de radiophare UMTS selon les revendications précédentes, **caractérisé en ce qu'**il est capable d'ajuster la puissance relative de chaque canal par rapport à la puissance totale et il permet à la puissance de sortie totale d'être distribuée parmi les différents canaux au choix de l'utilisateur.

9. Equipement de radiophare UMTS selon les revendications précédentes, **caractérisé en ce qu'**il est capable de générer le signal de référence à transmettre en variant le code de randomisation primaire parmi les 512 valeurs possibles.

10. Equipement de radiophare UMTS selon les revendications précédentes, **caractérisé en ce qu'**il éteint l'amplificateur de puissance de sortie de manière automatique dans le cas d'une alarme, et d'une manière complètement indépendante du reste de l'équipement.

11. Equipement de radiophare UMTS selon les revendications précédentes, **caractérisé en ce qu'**il est capable de radiodiffuser dans le canal BCH les paramètres du système configuré par l'opérateur dans l'ordinateur externe, ce qui permet un choix des caractéristiques du signal à transmettre.
